# EUROPEAN PATENT SPECIFICATION

(11) **EP 4 336 281 B1**
(45) Date of publication and mention of the grant of the patent: **28.01.2026**
(21) Application number: 22195125.4
(22) Date of filing: 12.09.2022
(51) Int. Cl.: G05B 19/042, G05B 17/02, G05B 13/02

(54) **METHOD FOR VALIDATING OR VERIFYING A TECHNICAL SYSTEM**
VERFAHREN ZUR VALIDIERUNG ODER ÜBERPRÜFUNG EINES TECHNISCHEN SYSTEMS
PROCÉDÉ DE VALIDATION OU DE VÉRIFICATION D'UN SYSTÈME TECHNIQUE

(43) Date of publication of application: 13.03.2024
(73) Proprietor: Robert Bosch GmbH, 70442 Stuttgart (DE)
(72) Inventor: Barsim, Karim Said Mahmoud, 70372 Stuttgart (DE); Gerwinn, Sebastian, 71229 Leonberg (DE); Schiegg, Martin, 70825 Korntal-Muenchingen (DE); Reeb, David, 71272 Renningen (DE); Patel, Kanil, 70435 Stuttgart (DE)

(56) References cited:
- US-A1- 2020 265 119
- US-A1- 2022 034 974
- US-A1- 2022 108 172

## Description

### Technical field

The invention concerns a computer-implemented method for validating or verifying a technical system, a computer program, and a machine-readable storage medium.

### Prior art

Shalev-Shwartz et al. 2018, "On a Formal Model of Safe and Scalable Self-driving Cars", https://arxiv.org/pdf/1708.06374.pdf discloses a mathematical model for safety assurance.

Danquah et al. 2021, "Statistical Validation Framework for Automotive Vehicle Simulations Using Uncertainty Learning", https://doi.org/10.3390/app11051983 discloses a statistical validation framework for dynamic systems with changing parameter configurations.

Jiang et al. 2021, "Assessing Generalization of SGD via Disagreement", Published at ICLR 2022, https://arxiv.org/abs/2106.13799 empirically shows that the test error of deep networks can be estimated by simply training the same architecture on the same training set but with a different run of Stochastic Gradient Descent.

### Technical background

A technical system comprises components, wherein the system can be understood to define interactions and/or interrelations between the components.

For example, a control system of a robot such as an autonomous vehicle typically comprises components for sensing an environment of the robot, for planning actions of the robot in such an environment and for determining control signals to actuators of the robot to execute the planned actions.

Modern technical systems typically comprise a considerable amount of components which in turn can make it very hard to predict the behavior of such a system. Given the aforementioned example, the components for sensing the environment may make mistakes in the sensing process, e.g., miss objects in the environment, the planning components may be faced with a sensed environment for which no suitable actions are known in the planning components or there may be discrepancies between the planned actions and the actions actually carried out by the robot.

In general, it is very hard to verify and/or validate that a technical system exhibits a desired behavior in its environment, let alone guarantee such a desired behavior. A main reason for this is that the components comprised by the system may in themselves exhibit unknown and/or stochastic behavior and/or may be so complex that they can only be treated as black boxes. For example, modern environment perception components of robots typically rely on methods from the field of machine learning, in particular deep learning methods, for sensing an environment. Such methods are inherently statistical, and their complexity typically does not allow for a straightforward approach for determining the exact behavior of the perception system.

Even beyond that, components of a system themselves may be systems, i.e., the system may actually be a system of systems. In such systems of systems, complexity grows quite rapidly which in turn makes it very hard to accurately predict the behavior of such a system of systems, i.e., verify and/or validate that the system behaves as required or desired.

Advantageously, the proposed invention allows for verifying and/or validating a technical system even if the technical system is complex, e.g., even if the technical system comprises a plurality of components that are intricately linked together.

### Disclosure of the invention

According to the independent claims,the invention concerns a method, a computer program and corresponding machine readable storage for verifying and/or validating whether a technical system fulfills a desired criterion, wherein the technical system emits output signals based on input signals supplied to the technical system, wherein the method comprises the steps of:
- Obtaining models for a plurality of components comprised by the technical system, wherein a connection between the obtained models characterizes which component passes which signal to which other component;
- Obtaining a plurality of validation measurements, wherein a validation measurement comprises a measurement input and a measurement output, wherein the measurement output is obtained from a component of the technical system for the measurement input if the measurement input is provided to the component;
- For each component, training a machine learning model to predict outputs of the respective component based on inputs of the respective component, wherein at least parts of the validation measurements are used as training dataset and wherein the machine learning model corresponds to the model obtained for the component;
- Obtaining first test outputs from a last model based on test inputs, wherein the first test outputs are obtained by propagating the test inputs through the connection of models;
- Determining, second test outputs from the machine learning model corresponding to the last model and based on the test inputs of the models, wherein the second test outputs are obtained by propagating the test inputs through a connection of the machine learning models, wherein the connection of the machine learning models is according to the connection of the models the respective machine learning models correspond to;
- Determine a deviation, wherein the deviation characterizes a difference between first test outputs determined from the last model and second test outputs determined by the machine learning model corresponding to the last model;
- Verifying and/or validating whether the technical system fulfills the criterion, wherein verifying and/or validating is characterized by determining a fraction of the first test outputs that fulfill an offset criterion, wherein the offset criterion is determined by offsetting the criterion by the determined deviation.

In general, the purpose of a method for verifying and/or validating a technical system may be understood as aiding a user of the method in determining a probability of the technical system to fulfill the desired criterion. The determined probability could then be compared to a probability threshold and the technical system could be considered as verified and/or validated with respect to the criterion if the probability of fulfilling the desired criterion is equal to or above the probability threshold. If the determined probability does not reach or exceed the probability threshold, the criterion can be considered to not be able to be verified or not be able to be validated. For example, the technical system could be a mobile robot and the criterion could be phrased as "the robot does not deviate from a desired path if the robot by more than 50cm". The method would then allow for statistically assessing a probability of the criterion to be fulfilled.

Alternatively, the method could also be used to determine a probability for violating the desired criterion. In this case, the criterion could be considered to be verified and/or validated of the determined probability is equal to or below the probability threshold.

In some embodiments, the desired criterion may be a requirement or a plurality of requirements with respect to some specification, e.g., design specification or legal specification. For example, it may be a requirement for a powertrain (i.e., the technical system) of a vehicle comprising an internal combustion engine to only produce a specified amount of emission particles (e.g., the number of NOx particles has to be below a predefined threshold) for a predefined time of operation. In this particular case, the method may aid a validation engineer to determine a probability for the powertrain to actually operate in accordance with the specified amount of emissions.

The probability threshold may be chosen in accordance with a specification of the system. Alternatively, the probability threshold may also be given by or derived from legal stipulations.

In general, the method may be used for any system comprising components or sub-systems. For all such systems, the method allows for a guided process. As verification and/or validation is typically an integral building block with respect to releasing a system under development, the system may for example be released if the criterion is verified and/or validated to be fulfilled. Alternatively, the method may be used to verify and/or validate multiple criteria and the system may be released if all criteria are verified and/or validated to be fulfilled. Alternatively, the method may be a part of a larger test strategy for assessing whether the system may be released. In all embodiments discussed above, the system may for example not be released if a criterion or multiple criteria cannot be verified and/or validated. In such cases, components of the technical system may be improved, and the method may be run again after improvement of the components in order to verify and/or validate the improved system with respect to the criterion or the criteria. For example, in the embodiment from above, the engine may be limited in its power in order to reduce the amount of emitted particles and/or components of the powertrain may be exchanged for more efficient components with respect to the emitted particles.

In other words, the method can be understood as a human-machine guided process for assessing whether a certain criterion can be expected to be fulfilled when using the system in the real world.

The technical system interacts with the real world by means of determining the output signal based on an input signal. In the exemplary embodiment from above, the powertrain may for example be equipped with sensors for measuring a temperature of an environment of the powertrain and may control the engine and/or parts of an after-treatment of exhaust gas, e.g., a catalyst, accordingly. However, the input signals to the system do not necessarily need to be input into the technical system by means of a sensor or communication device. The input signals may, for example, also characterize environment conditions of the technical system that have an influence on the operation of the technical system.

For example, the amount of emissions produced by an internal combustion engine typically depends on a temperature of the environment of the internal combustion engine. In such an embodiment, the temperature could be considered an input signal of the technical system even though the engine does not receive temperature information by means of a sensor or communication device. In other words, the temperature has a physical impact on the engine without the engine measuring the temperature. The input signal may hence also be understood as an input stimulus.

The different components of the technical system may hence be connected by means of an exchange of information through, e.g., signals (e.g., measurement data, control signals) and/or by means of physical interaction (e.g., processing of exhaust gas).

Generally, a technical system as described in this invention may be quite complex, e.g., in the way components of the technical system interact with each other and/or complex with respect to the individual components of the technical system, which may make it very hard to accurately assess the behavior of the technical system with respect to different environment situations and such different input signals of the technical system. With known methods, the only way to assess the behavior of such a technical system is typically to treat the technical system as a black box with respect to its input-output behavior, run the technical system in the real world to collect data about the input-output behavior and use statistical methods to deduct information about the input-output behavior. This may also be understood as gathering data to predict an input-output behavior of the technical system. However, the main drawback of such approaches is that typically a large amount of data needs to be collected in order to accurately assess the input-output behavior. Especially for safety critical systems and/or technical systems that are bound to some form of legal provision with respect to its input-output behavior (e.g., only a maximum number of allowed emitted particles over a certain time of operation) collecting such data to accurately predict the input-output behavior requires an excessive test or validation campaign which often times is infeasible due to the vast amount of data necessary to collect.

Advantageously, the proposed method allows for vastly reducing the actual amount of real-world data that needs to be collected while still being able to accurately assess an input-output behavior of the technical system. In particular, the method allows for verification and/or validation of a technical system without the need for end-to-end data (black box), but rather only component-level data; thus, verification and/or validation may be performed during the design of the technical system, even before the full technical system has been assembled.

It may also be possible to use the proposed method for deciding on components of the technical system. For example, there may exist different types of components that could plausible be used in the technical system (e.g., different types of catalysts in the example of the powertrain). For each such component, a dedicated model may be used and the fulfillment of the criterion could be evaluated for all such possible and feasible combinations of components. Then, for example, the configuration of components resulting in a best probability could be used as design specification for building the technical system.

From an abstract point of view, the method may be understood in so far as that a model of the technical system is constructed by means of modelling the different components of the technical system through different models as well as machine learning models and then being able to simulate the behavior of the technical system by means of the model. Advantageously, the behavior of the technical system can be simulated by means of the models as well as the machine learning models. The inventors found that a difference between outputs, i.e., between first outputs determined from the models and second outputs determined from the machine learning models, can favorably be used to heuristically determine the probability of the technical system fulfilling the criterion.

In the following, reference is made to models as well as machine learning models. In such cases, the term model refers to a model of a component, preferably a physical model, however, statistical models for components could reasonably used when referring to models as well. The term "machine learning system" refers to statistical models preferably determined by means of a supervised training using input and output data of a component as training data.

In the method, it is possible if a model is a statistical model then its corresponding machine learning model may be the same statistical model. This may especially be the case if the component corresponding to the model is the statistical model. For example, the technical system could be a robot using a perception pipeline for determining its surroundings, wherein a neural network is used for determining objects in a vicinity of the robot. The neural network may be understood as a component of the technical system, wherein the neural network itself can also be used as model and as machine learning model.

In a first step, models for the components of the technical system are obtained. A model may be a physical model. In the example from above, the engine of the powertrain (the powertrain being the technical system, the engine being a component of the technical system) may be modelled by a physical model of the engine. Alternatively, a model may be given by the component itself (see example of the neural network from above).

Advantageously, a modelling granularity may be chosen at the user's discretion. That is, the detail of the models (and consequently a detail of the machine learning models) may be chosen at the user's discretion. For example, the user may determine whether to model the component of an engine as a single model or to apply a fine-grained modelling, e.g., by modelling fuel injection behavior, combustion behavior, and/or mechanical properties of parts of the engine such as the pistons, the valves, and the crankshaft.

In other words, the method is agnostic to the level of modelling (coarse grained, fine grained or anything in between) of the components.

In a second step, validation measurements are obtained for the components of the technical system. In the context of the method, validation measurements are understood as pairs of a measurement input and a measurement output, wherein a measurement output is obtained if a component is provided the measurement input. In other words, measurement outputs are linked to the components, which determine the respective output. A measurement output of a first component may be provided as measurement input to a second component. An input of the technical system may also be used as measurement input to one or multiple components of the technical system. Advantageously, the validation measurement for each component of the technical system may be obtained by running and measuring the respective component in isolation, e.g., on a test bench. If the overall technical system is already assembled and/or available to be run, the validation measurements may also be obtained by running one or multiple test runs (sometimes also referred to as validation runs) of the technical system in the real world and measuring the respective input measurements and output measurements of each component.

In a third step, the validation measurements are used to train the machine learning models. For this, the measurement inputs and measurement outputs of each component may be used to train a machine learning model. This can be understood as supervised training with the measurement inputs of the component serving as independent variable and the measurement outputs of the component serving as dependent variable.

In preferred embodiments, at least one of the machine learning models is or comprises a Gaussian process. If the machine learning model comprises a Gaussian process, the machine learning model may comprise other elements, e.g., preprocessing or postprocessing elements, for determining an output of the machine learning model. The machine learning model my especially be configured for Gaussian process regression or Gaussian process classification depending on the type of data put out by the component. If the component has time-series as inputs and outputs, one can construct such time-series models by a suitable combination of Gaussian Processes as well (e.g., GP-NARX).

In a fourth and fifth step, the models are then used to determine first test outputs and the machine learning models are used to determine second test outputs. This is achieved by means of propagating information through a connection of models and a connection of machine learning models respectively. The respective connections are derived from the components of the technical system. The components in the technical system are (logically) connected based on which component provides input to which other component. The connection may characterize actual signals passed between components as well as stimuli passed between components. As models as well as machine learning models correspond to a single component by means of a 1-to-1 relationship, the connections of the components can also be used as connections between the models and as connections between the machine learning models. The models hence form a chain defining a flow of information from a first model to a last model of the chain. This flow of information models the flow of information as would happen in the technical system itself. Likewise, the machine learning models form a chain, wherein this chain defines a different model of the flow of information in the technical system. A test input may hence be propagated through the chain of models and the chain of machine learning models respectively in order to predict a respective result as would have been the result if the test input was provided to the technical system itself (or had occurred as stimulus for the technical system).

The first test outputs are obtained from a last model of the chain of models. Likewise, the second test outputs are obtained from the machine learning model corresponding to the last model. The qualifier first and second simply denote correspondence to either the last model (first) or the machine learning model (second) corresponding to the last model.

In the method, the models and machine learning models are preferably provided with a plurality of test inputs to determine a plurality of first test outputs and a plurality of second test outputs. Test inputs may preferably be obtained by synthesizing the desired data. For example, the validation measurements can be used to train a generative machine learning model such as a generative adversarial network, a normalizing flow, or a diffusion model. The trained model may then be sampled from to determine the test inputs. This way, the amount of data for verifying and/or validating the technical system can easily be improved without the need for gathering data in the real world. However, real-world data can also be used as test inputs, either in combination with synthetic data or standalone.

The pairs of test inputs and test outputs may be considered counterparts to measurement inputs and measurements outputs. Where measurement inputs and measurement outputs are linked to the components of the technical system, test inputs and test outputs are linked to the models or machine learning models.

When forwarding data through the machine learning models, each model or machine learning model may predict a plurality of outputs for a given test input, wherein this plurality of outputs is then provided to another machine learning model. This way, the amount of data is further increased and the verification and/or validation result is even more reliable.

In a sixth step, a difference between first test outputs from the last model and second test outputs from the machine learning model corresponding to the model is determined. This can be understood as determining how much the models' predictions agree with the machine learning models' predictions. For determining a difference, a same test input may be propagated through the models and propagated through the machine learning models. For this test input, a first test output and a second test output may hence be determined. It is also possible that a plurality of first test outputs and/or second test outputs are determined. If this is the case, the plurality of first test outputs may be aggregated into a single first test output by means of averaging the plurality of first test outputs. Likewise, the plurality of second test outputs may be aggregated into a single second test output by means of averaging the plurality of second test outputs.

Eventually, there is a single first test output and a single second test output for the test input. The first test output may then be subtracted from the second test output to determine a difference between the models and the machine learning models for the given test input. This process is preferably repeated for a plurality of test inputs resulting in a plurality of differences between the models and the machine learning models. Viewing the difference between models and machine learning models as a random variable, a typical deviation between the models and machine learning models may then be assessed by determining a predefined quantile of the determined difference values. While the exact quantile to be used may be viewed as a hyperparameter of the method that can be tuned with known hyperparameter optimization methods, the inventors found the 95% quantile to be adequate for the method.

In a seventh step, it is then verified and/or validated whether the technical system fulfills an offset criterion, wherein the offset criterion is determined by offsetting the criterion by the determined deviation. This can be achieved by determining the fraction of first test outputs that fulfill the offset criterion. The fraction is equal to the probability of fulfilling the criterion.

Surprisingly, the authors found that the deviation can be used as an uncertainty measure or safety margin with respect to how accurate first test outputs predict the behavior of the technical system. If a fraction of first test outputs overcomes this safety margin, the respective fraction can readily be used for assessing a probability of fulfilling the criterion.

If the criterion is defined in terms of a number, the deviation can, for example, by subtracted from the number or added to the number for determining the offset, depending on whether the criterion states that the number shall be exceeded or not be exceeded. Alternatively, if the criterion is not defined in terms of a number, the deviation could be subtracted from each of the first test outputs and the criterion could be assessed with respect to the offset first test outputs.

The deviation may hence be understood as a safety margin that the first test outputs have to overcome (with a desired probability) in order to assess the criterion as fulfilled.

Failing to be able to verify and/or validate the criterion may hinge on the models being used in the method to be too inaccurate to allow for a tight enough bound on the output of the model modelling the output component. A loose bound may result in failing to meet the criterion, wherein failure to meet the criterion may stem from the inaccuracy of one or multiple models with respect to their respective components, which may result in too pessimistic of a bound on the output. Thus, one or multiple models may advantageously be improved upon, i.e., they may be adapted to reflect the behavior of their respective component more accurately. This may be achieved by using the deviation as loss function and optimizing the one or multiple models such that the deviation is decreased. If the model is differentiable, this may be achieved by means of a gradient descent algorithm. Alternatively or for models that are not differentiable, evolutionary algorithms may be used for optimization.

Advantageously, an improvement of the model can lead to a tighter bound of the model corresponding to the output component and thus a more accurate assessment of the criterion. Assessing this improvement should preferably be done using measurement data (i.e., measurement inputs and measurement outputs) that were not used for improving the models as this could otherwise lead to overfitting and/or information leakage.

In any one of the aforementioned embodiments, it is further possible that components of the technical system are improved if the criterion cannot be verified and/or validated.

This may be understood as determining that the technical system cannot or is likely to not being able to satisfy the desired criterion and thus has to be improved in order to meet the desired criterion. Using the example from the powertrain, improving upon a component may for example include reducing a power of the engine to consume less fuel and thus emit less particles and/or replace a catalyst of the powertrain in order to filter out more emitted particles.

Embodiments of the invention will be discussed with reference to the following figures in more detail. The figures show:
- Figure 1: a control system;
- Figure 2: the control system controlling an at least partially autonomous robot;
- Figure 3: the control system controlling a manufacturing machine.

### Description of the embodiments

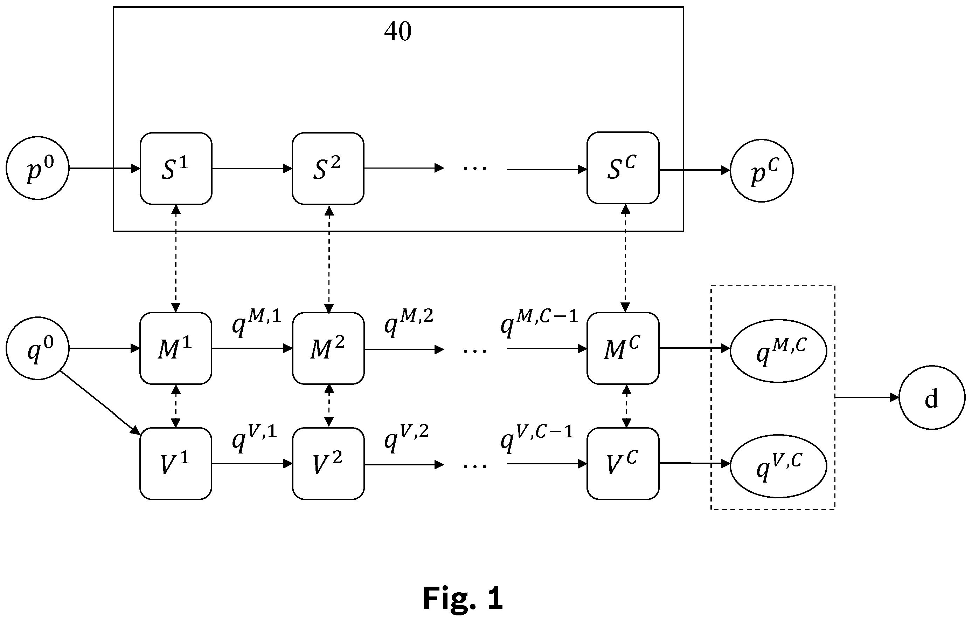

Figure 1 exemplarily shows how a control system (40) comprising a plurality of components (*S*¹, *S*², *C^{C}*) can be verified and/or validated. The control system (40) may be understood as an embodiment of the technical system referred to in this application. For each component (*S*¹, *S*², *S*) a respective model (*M*¹*, M*²*, M^{C}*) is provided. A model (*M*¹*, M*²*, M^{C}*) has a one-to-one correspondence with a component (*S¹, S*²*, S^{C}*) indicated by a dashed arrow. For each component (*S¹, S², S^{C}*), a machine learning model (*V*¹, *V*², *V^{C}*) is further provided, wherein the machine learning model (V¹, *V*²*, V^{C}*) corresponds to both the component (*S*¹*, S*²*, S^{C}*) and the respective model (*M*¹, *M*², *M^{C}*) of the component (*S*¹, *S*², *S^{C}*). Each component (*S*¹, *S*², *S^{C}*) accepts an input measurement and provides and output measurement either to another component (*S*²*, S^{C}*) or as an output of the control system (40). The machine learning models (*V*¹, *V*², *V^{C}*) are trained to predict an output measurement of their corresponding component (*S*¹*, S*²*, S^{C}*) if the component (*S*¹*, S*²*, S^{C}*) is provided with an input measurement.

The control system (40) comprises an input component (*S*¹), which is configured to accept input from a sensor. The sensor may preferably be part of the control system (40). The sensor provides input measurements to the input component.

The control system (40) is configured to determine an output or an action based on the input measurement. For this, an input measurement is forwarded through the components. Each component thus receives an input that is based on an input measurement but has been processed by a component of the control system (40) (unless the component is the input component). For example, the input component (*S*¹) receives the input measurement, determines some output from the input measurement and forwards the determined output to another component (*S*²) of the control system (40). In turn, the other component (*S*²) processes the input provided to the other component (*S*²) and forwards its output to yet another component (not shown).

The output of a last component (*S^{C}*) of the control system (40) may be a signal characterizing an action to be performed and/or characterizing a real number. For example, if the control system (40) is configured to determine a control signal of a robot (e.g., an at least partially autonomous vehicle), the output may characterize a high-level action to be performed by the robot (e.g., perform a lane change) or may characterize a numerical value used for controlling the robot (e.g., a steering angle position, an acceleration rate and/or a brake force). The output may be understood as being subject to verification and/or validation by the proposed method with respect to some desired criterion. Using the example of the robot, the criterion may be that any action taken by the robot may not result in the robot deviating more than a predefined allowed distance from a predefined or determined path. In further embodiments (not shown) it is also possible that the output component of the control system (40) is a "special" component that is otherwise not used when operating the control system (40) but is used for assessing the behavior of the control system (40). For example, the output component may be an emission measuring device for determining an amount of particles emitted from a component of the control system (40), e.g., in case the control system (40) is a powertrain.

A plurality of input measurements determined for the control system (40) can be considered a random sampling of a probability distribution (*p*⁰). For verifying and/or validating the control system (40) a similar plurality of test inputs may be used. The test inputs may preferably be obtained synthetically by a synthesis model. Even more preferably, the test inputs may be a combination of both synthetically obtained data and input measurements.

When providing a test input to the chain of models and chain of machine learning systems respectively, each model and each machine learning system determines a respective output. If this is repeated for a plurality of test inputs, the outputs of the respective models and machine learning models can be considered distributions (*q*^{*M,*0}, *q*^{*M,*1}, *q*^{*M*,*C*-1}, *q^{M,C}, q*^{*V,*0}, *q*^{*V,*1}, *q*^{*V,C*-1}, *q^{V,C}*) about respective outputs.

A distribution (*q^{M,C}*) obtained from the last model (*M^{C}*) can be understood as typical predictions about the output behavior of the control system (40) as predicted by the models (*M*¹*, M*²*, M^{C}*). Likewise, a distribution (*q^{V,C}*) obtained from the last machine learning model (*V^{C}*) can be understood as typical predictions about the output behavior of the control system (40) as predicted by the machine learning models (*V*¹, *V*², *V^{C}*). For determining the respective distribution, the same test inputs are used. That is, a test input results in a first test output as predicted by the last model (*M^{C}*) as well as in a second test output as predicted by the last machine learning model (*V^{C}*). A difference between the first test output and the second test output can be considered a disagreement between models (*M*¹*, M*²*, M^{C}*) and machine learning models (*V*¹, *V*², *V^{C}*) concerning what the control system (40) would have put out when provided the test input as input.

It should be noted here that test inputs and measurement inputs share a same structure (e.g., vectors of the same dimensionality) as well as semantic similarities (e.g., the test input and measurement input each characterize an image).

In the method, first test outputs and corresponding second test outputs (i.e., test outputs obtained for the same test input as was used for obtaining the first test output) can be used for determining a typical disagreement between the output of the models and the output of the machine learning models. Preferably, this is achieved by determining a quantile, preferably a quantile above 90%, of differences between corresponding first test outputs and second test outputs. In the embodiment, a 95% quantile is used. The inventors found that the quantile can be used as an empirical safety margin. If the safety margin is added to the criterion (or subtracted, depending on the desired criterion), the distribution (*p^{M,C}*) of the last model (*M^{C}*) can be assessed with respect to the margin, i.e., which fraction of the first test outputs still fulfills the criterion when adding (or subtracting) the safety margin. This fraction can be used directly as a (estimated bound on the) probability for fulfilling the criterion. To assess the criterion with respect to an even more conservative safety margin, the quantile can be determined with respect to absolute differences between first test outputs and corresponding second test outputs.

The criterion can then be understood as verified and/or validated if the determined probability equals or exceeds a predefined probability.

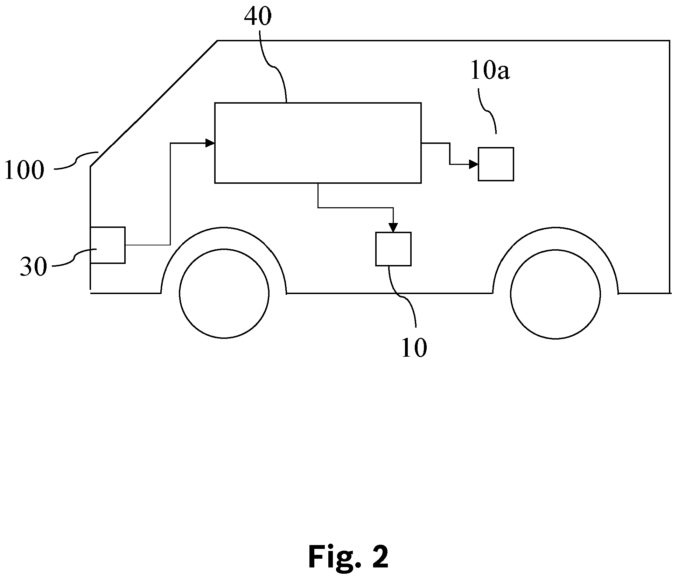

Figure 2 shows an embodiment in which the control system (40) is used to control an at least partially autonomous robot, e.g., an at least partially autonomous vehicle (100).

A sensor (30) of the vehicle (100) may comprise one or more video sensors and/or one or more radar sensors and/or one or more ultrasonic sensors and/or one or more LiDAR sensors. Some or all of these sensors are preferably but not necessarily integrated in the vehicle (100). The control system may, for example, be configured to automatically keep the vehicle (100) above a predefined distance from other objects in an environment of the vehicle (100) or have the vehicle not reduce a time to collision with vehicles in the environment below a predefined threshold. The desired criterion to be validated may, for example, be that the probability of the vehicle (100) approaching another vehicle closer than the predefined distance is below a predefined percentage threshold.

The control system (40) may preferably comprise an image classifier as a component, e.g., as input component (*S*¹). The image classifier may be configured to detect objects in the vicinity of the at least partially autonomous robot based on input images. A measurement output of the input images may comprise an information, which characterizes where objects are located in the vicinity of the at least partially autonomous robot. A subsequent component may then determine a suitable driving path through the environment such that the predefined distance or the predefined threshold concerning the time to collision is kept to all recognized objects. A control signal may then be determined from an output component of the control system (40). The control signal may be used to control an actuator (10) of the vehicle (100). The control signal may be set to have the vehicle drive in accordance with the driving path.

The actuator (10), which is preferably integrated in the vehicle (100), may be given by a brake, a propulsion system, an engine, a powertrain, or a steering of the vehicle (100).

In further embodiments, the at least partially autonomous robot may be given by another mobile robot (not shown), which may, for example, move by flying, swimming, diving, or stepping. The mobile robot may, inter alia, be an at least partially autonomous lawn mower, or an at least partially autonomous cleaning robot. In all of the above embodiments, the control signal may be determined such that propulsion unit and/or steering and/or brake of the mobile robot are controlled such that the mobile robot may avoid collisions with said identified objects.

In a further embodiment, the at least partially autonomous robot may be given by a gardening robot (not shown), which uses the sensor (30), preferably an optical sensor, to determine a state of plants in the environment (20). The actuator (10) may control a nozzle for spraying liquids and/or a cutting device, e.g., a blade. Depending on an identified species and/or an identified state of the plants, a control signal may be determined to cause the actuator (10) to spray the plants with a suitable quantity of suitable liquids and/or cut the plants.

In even further embodiments, the at least partially autonomous robot may be given by a domestic appliance (not shown), like e.g. a washing machine, a stove, an oven, a microwave, or a dishwasher. The sensor (30), e.g., an optical sensor, may detect a state of an object which is to undergo processing by the household appliance. For example, in the case of the domestic appliance being a washing machine, the sensor (30) may detect a state of the laundry inside the washing machine. The control signal may then be determined depending on a detected material of the laundry.

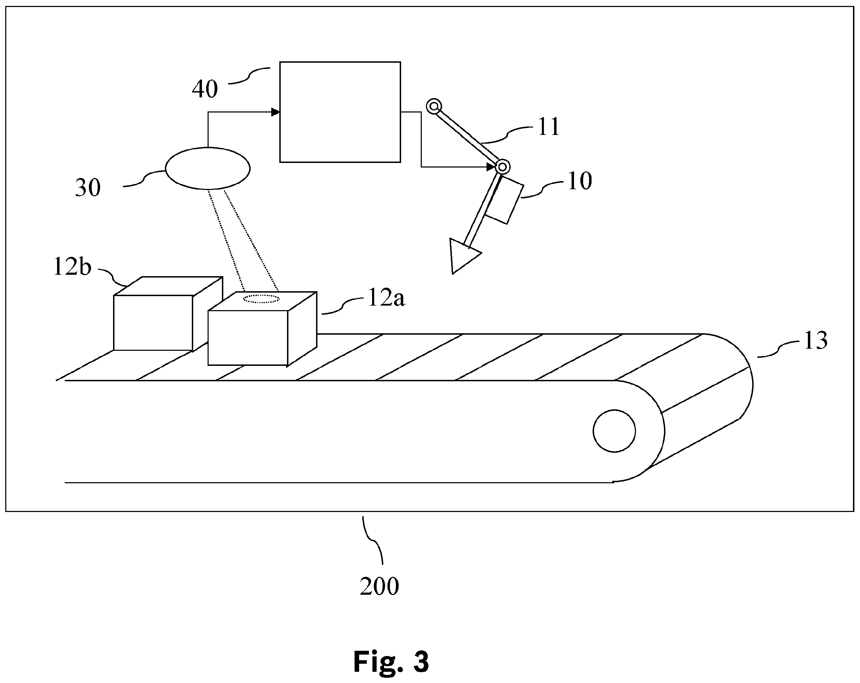

Figure 3 shows an embodiment in which the control system (40) is used to control a manufacturing machine (11), e.g., a punch cutter, a cutter, a gun drill, a welding robot, or a gripper, of a manufacturing system (200), e.g., as part of a production line. The manufacturing machine (11) may comprise a transportation device, e.g., a conveyer belt or an assembly line, which moves a manufactured product (12). The control system (40) controls an actuator (10), which in turn controls the manufacturing machine (11).

A sensor (30) used for providing input measurements to the control system (40) may be given by an optical sensor which captures properties of, e.g., a manufactured product (12). The control system (40) may comprise an image classifier as input component (*S*¹).

The image classifier may determine a position of the manufactured product (12) with respect to the transportation device. The actuator (10) may then be controlled depending on the determined position of the manufactured product (12) for a subsequent manufacturing step of the manufactured product (12). For example, the actuator (10) may be controlled to cut or weld the manufactured product along a specific path on the manufactured product (12). In these embodiments, the path may be determined by a component of the control system (40), wherein another component of the control system (40) then determines control signals for the actuator (10) of the manufacturing machine (11). The desired criterion may be that a cut or weld does not deviate from the planned path by more than a predefined threshold.

Alternatively, it may be envisioned that the image classifier classifies, whether the manufactured product is broken or exhibits a defect. The actuator (10) may then be controlled as to remove the manufactured product (12) from the transportation device. In this case, the desired criterion may be that the amount of manufactured products (12) that is wrongfully sorted out (e.g., products that are actually not broken or exhibit a defect but are still sorted out) is below a predefined threshold.

## Claims

1. Method for verifying and/or validating whether a technical system (40) fulfills a desired criterion, wherein the technical system (40) emits output signals based on input signals supplied to the technical system (40), wherein the method comprises the steps of:
• Obtaining models (*M*¹,*M*²*,M^{C}*) for a plurality of components (*S*¹,*S*²,*S*^{C}) comprised by the technical system (40), wherein a connection between the obtained models characterizes which component passes which signal to which other component;
• Obtaining a plurality of validation measurements, wherein a validation measurement comprises a measurement input and a measurement output, wherein the measurement output is obtained from a component (*S*¹,*S*²,*S^{C}*) of the technical system (40) for the measurement input if the measurement input is provided to the component (*S*¹*,S*²*,S^{C}*);
• For each component (*S*¹*,S*²*,S^{C}*)*,* training a machine learning model (*V*¹,*V*²,*V^{C}*) to predict outputs of the respective component (*S*¹*,S*²*,S^{C}*) based on inputs of the respective component, wherein at least parts of the validation measurements are used as training dataset and wherein the machine learning model (*V*¹,*V*²,*V^{C}*) corresponds to the model (*M*¹,*M*²,*M^{C}*) obtained for the component;
• Obtaining first test outputs (*q^{M,C}*) from a last model (*M^{C}*) based on test inputs (q⁰), wherein the first test outputs (*q^{M,C}*) are obtained by propagating the test inputs (q⁰) through the connection of models;
• Determining, second test outputs (*q^{V,C}*) from the machine learning model (*V^{C}*) corresponding to the last model and based on the test inputs (*q*⁰) of the models (*M*¹,*M*²,*M^{C}*), wherein the second test outputs (*q^{V,C}*) are obtained by propagating the test inputs (q⁰) through a connection of the machine learning models (*V*¹,*V*²,*V^{C}*), wherein the connection of the machine learning models (*V*¹,*V²*,*V^{C}*) is according to the connection of the models (*M*¹*,M*²,*M^{C}*) the respective machine learning models (*V*¹,*V*²,*V^{C}*) correspond to;
• Determine a deviation (d), wherein the deviation (d) characterizes a difference between first test outputs (*q^{M,C}*) determined from the last model (*M^{C}*) and second test outputs (*q^{V,C}*) determined by the machine learning model (*V^{C}*) corresponding to the last model (*M^{C}*);
• Verifying and/or validating whether the technical system (40) fulfills the criterion, wherein verifying and/or validating is **characterized by** determining a fraction of the first test outputs (*q^{M,C}*) that fulfill an offset criterion, wherein the offset criterion is determined by offsetting the criterion by the determined deviation (d).

2. Method according to claim 1, wherein the deviation is determined by determining differences for a plurality of first test outputs and corresponding second test outputs and providing a predefined quantile of the differences as deviation.

3. Method according to claim 1 or 2, wherein at least one of the machine learning models is or comprises a Gaussian process.

4. Method according to any one of the claims 1 to 3, wherein the test inputs and test outputs are determined by synthesizing inputs of the technical system (40) and forwarding the synthesized inputs through the models.

5. Method according to any one of the claims 1 to 4, wherein a model is improved if the criterion cannot be verified and/or validated.

6. Method according to any one of the claims 1 to 5, wherein the technical system (40) is configured to provide a control signal to a manufacturing machine, and/or a robot.

7. Computer program that is configured to cause a computer to carry out the method according to any one of the claims 1 to 6 with all of its steps if the computer program is carried out by a processor.

8. Machine-readable storage medium on which the computer program according to claim 7 is stored.

## Patentansprüche

1. Verfahren zum Verifizieren und/oder Validieren, ob ein technisches System (40) ein gewünschtes Kriterium erfüllt, wobei das technische System (40) Ausgabesignale auf der Grundlage von Eingabesignalen, die dem technischen System (40) zugeführt werden, abgibt und das Verfahren die folgenden Schritte umfasst:
• Erhalten von Modellen (M¹, M², M^{C}) für mehrere Komponenten (S¹, S², S^{C}), die das technische System (40) aufweist, wobei eine Verbindung zwischen den erhaltenen Modellen charakterisiert, welche Komponente welches Signal zur weiteren Komponente weiterleitet;
• Erhalten mehrerer Validierungsmessungen, wobei eine Validierungsmessung eine Messungseingabe und eine Messungsausgabe umfasst und die Messungsausgabe von einer Komponente (S¹, S², S^{C}) des technischen Systems (40) für die Messungseingabe erhalten wird, falls die Messungseingabe für die Komponente (S¹, S², S^{C}) bereitgestellt wird;
• Trainieren für jede Komponente (S¹, S², S^{C}) eines Modells (V¹, V², V^{C}) für maschinelles Lernen, um Ausgaben der jeweiligen Komponente (S¹, S², S^{C}) auf der Grundlage von Eingaben der jeweiligen Komponente vorherzusagen, wobei mindestens Teile der Validierungsmessungen als Trainingsdatensatz verwendet werden und das Modell (V¹, V², V^{C}) für maschinelles Lernen dem Modell (M¹, M², M^{C}), das für die Komponente erhalten wurde, entspricht;
• Erhalten erster Prüfausgaben (q^{M, C}) aus einem letzten Modell (M^{C}) auf der Grundlage von Prüfeingaben (q^{O}), wobei die ersten Prüfausgaben (q^{M, C}) durch Verbreiten der Prüfeingaben (q⁰) durch die Verbindung von Modellen erhalten werden;
• Bestimmen zweiter Prüfausgaben (q^{V, C}) aus dem Modell (V^{C}) für maschinelles Lernen, das dem letzten Modell entspricht, und auf der Grundlage der Prüfeingaben (q⁰) der Modelle (M¹, M², M^{C}), wobei die zweiten Prüfausgaben (q^{V, C}) durch Verbreiten der Prüfeingaben (q⁰) über eine Verbindung der Modelle (V¹, V², V^{C}) für maschinelles Lernen erhalten werden und die Verbindung der Modelle (V¹, V², V^{C}) für maschinelles Lernen gemäß der Verbindung der Modelle (M¹, M², M^{C}), denen die jeweiligen Modelle für maschinelles Lernen(V¹, V², V^{C}) entsprechen, ist;
• Bestimmen einer Abweichung (d), wobei die Abweichung (d) eine Differenz zwischen ersten Prüfausgaben (q^{M, C}), die vom letzten Modell (M^{C}) bestimmt wurden, und zweiten Prüfausgaben (q^{V, C}), die durch das Modell (V^{C}) für maschinelles Lernen, das dem letzten Modell (M^{C}) entspricht, bestimmt wurden, charakterisiert; und
• Verifizieren und/oder Validieren, ob das technische System (40) das Kriterium erfüllt, wobei das Verifizieren und/oder das Validieren durch ein Bestimmen eines Anteils der ersten Prüfausgaben (q^{M, C}), die ein versetztes Kriterium erfüllen, gekennzeichnet ist, wobei das versetzte Kriterium durch Versetzen des Kriteriums um die bestimmte Abweichung (d) bestimmt wird.

2. Verfahren nach Anspruch 1, wobei die Abweichung durch Bestimmen von Differenzen für mehrere erste Prüfausgaben und entsprechende zweite Prüfausgaben und ein Bereitstellen eines vordefinierten Quantils der Differenzen als Abweichung bestimmt wird.

3. Verfahren nach Anspruch 1 oder 2, wobei mindestens eines der Modelle für maschinelles Lernen ein Gaußprozess ist oder ihn umfasst.

4. Verfahren nach einem der Ansprüche 1 bis 3, wobei die Prüfeingaben und die Prüfausgaben durch Synthetisieren von Eingaben des technischen Systems (40) und Weiterleiten der synthetisierten Eingaben durch die Modelle bestimmt werden.

5. Verfahren nach einem der Ansprüche 1 bis 4, wobei ein Modell verbessert wird, falls das Kriterium nicht verifiziert und/oder validiert werden kann.

6. Verfahren nach einem der Ansprüche 1 bis 5, wobei das technische System (40) konfiguriert ist, ein Steuersignal für eine Fertigungsmaschine und/oder einen Roboter bereitzustellen.

7. Computerprogramm, das konfiguriert ist, zu bewirken, dass ein Computer das Verfahren nach einem der Ansprüche 1 bis 6 mit allen seinen Schritten ausführt, falls das Computerprogramm durch einen Prozessor ausgeführt wird.

8. Maschinenlesbares Speichermedium, in dem das Computerprogramm nach Anspruch 7 gespeichert ist.

## Revendications

1. Procédé pour vérifier et/ou valider si un système technique (40) remplit un critère souhaité, le système technique (40) émettant des signaux de sortie sur la base de signaux d'entrée fournis au système technique (40), le procédé comprenant les étapes suivantes :
• l'obtention de modèles (M¹, M², M^{C}) pour une pluralité de composants (S¹, S², S^{C}) compris dans le système technique (40), une connexion entre les modèles obtenus caractérisant quel composant transmet quel signal à quel autre composant ;
• l'obtention d'une pluralité de mesures de validation, une mesure de validation comprenant une entrée de mesure et une sortie de mesure, la sortie de mesure étant obtenue à partir d'un composant (S¹, S², S^{C} du système technique (40) pour l'entrée de mesure si l'entrée de mesure est fournie au composant (S¹, S², S^{C}) ;
• pour chaque composant (S¹, S², S^{C}), l'apprentissage d'un modèle d'apprentissage automatique (V¹, V², V^{C}) pour prédire les sorties du composant respectif (S¹, S², S^{C}) sur la base des entrées du composant respectif, au moins des parties des mesures de validation étant utilisées comme ensemble de données d'apprentissage et le modèle d'apprentissage automatique (V¹, V², V^{C}) correspondant au modèle (M¹, M², M^{C}) obtenu pour le composant ;
• l'obtention de premières sorties de test (q^{M, C}) à partir d'un dernier modèle (M^{C}) sur la base d'entrées de test (q⁰), les premières sorties de test (q^{M, C}) étant obtenues en propageant les entrées de test (q⁰) au moyen de la connexion de modèles ;
• la détermination de secondes sorties de test (q^{V, C}) à partir du modèle d'apprentissage automatique (V^{C}) correspondant au dernier modèle et sur la base des entrées de test (q⁰) des modèles (M¹, M², M^{C}), les secondes sorties de test (q^{V, C}) étant obtenues par la propagation des entrées de test (q⁰) au moyen d'une connexion des modèles d'apprentissage automatique (V¹, V², V^{C}), la connexion des modèles d'apprentissage automatique (V¹, V², V^{C}) étant conforme à la connexion des modèles (M¹, M², M^{C}) auxquels correspondent les modèles respectifs d'apprentissage automatique (V¹, V², V^{C}) ;
• la détermination d'un écart (d), l'écart (d) caractérisant une différence entre des premières sorties de test (q^{M, C}) déterminées à partir du dernier modèle (M^{C}) et des secondes sorties de test (q^{V, C}) déterminées par le modèle d'apprentissage automatique (V^{C}) correspondant au dernier modèle (M^{C}) ;
• la vérification et/ou la validation du fait que le système technique (40) remplit le critère, la vérification et/ou la validation étant **caractérisée par** la détermination d'une fraction des premières sorties de test (q^{M, C}) qui remplissent un critère de décalage, le critère de décalage étant déterminé par décalage du critère par l'écart déterminé (d).

2. Procédé selon la revendication 1, l'écart étant déterminé en déterminant des différences pour une pluralité de premières sorties de test et de secondes sorties de test correspondantes et en fournissant un quantile prédéfini des différences comme écart.

3. Procédé selon la revendication 1 ou 2, au moins un des modèles d'apprentissage automatique étant ou comprenant un processus gaussien.

4. Procédé selon l'une quelconque des revendications 1 à 3, les entrées de test et les sorties de test étant déterminées en synthétisant des entrées du système technique (40) et en transmettant les entrées synthétisées au moyen des modèles.

5. Procédé selon l'une quelconque des revendications 1 à 4, un modèle étant amélioré si le critère ne peut pas être vérifié et/ou validé.

6. Procédé selon l'une quelconque des revendications 1 à 5, le système technique (40) étant configuré pour fournir un signal de commande à une machine de fabrication et/ou à un robot.

7. Programme informatique qui est configuré pour amener un ordinateur à réaliser le procédé selon l'une quelconque des revendications 1 à 6 avec toutes ses étapes si le programme informatique est exécuté par un processeur.

8. Support de stockage lisible par machine sur lequel est stocké le programme informatique selon la revendication 7.
